Europäisches Patentamt

European Patent Office

Office européen des brevets

(11) Publication number: **0 226 330**

A1

# EUROPEAN PATENT APPLICATION

(21) Application number: 86308790.4

(22) Date of filing: 12.11.86

(51) Int. Cl.⁴ **C03B 9/38** , C03B 9/40 , G05D 23/00

(30) Priority: 14.11.85 GB 8528086

(43) Date of publication of application: 24.06.87 Bulletin 87/26

(84) Designated Contracting States: DE FR IT

(71) Applicant: EMHART INDUSTRIES, INC.
426 Colt Highway
Farmington Connecticut 06032(US)

(72) Inventor: Fenton, Frank Alan
72 Sandall Park Drive
Wheatley Doncaster Yorkshire(GB)
Inventor: Williams, Jeffrey Hughes
Genald, 21 New Lane Sprotborough
Doncaster Yorkshire(GB)

(74) Representative: Drury, Peter Lawrence et al
Emhart Patents Department P.O. Box 88
Ross Walk
Belgrave Leicester LE4 5BX(GB)

(54) Controlling the operation of a glassware forming machine.

(57) In controlling the operation of a glassware forming machine, upper and lower limits are set for the speed of operation, sensors (22; 28) are used to sense the cooling capacity of mould-cooling air supplied to the machine, and the speed of the machine (10) is adjusted between the establisheed limits in accordance with the cooling capacity sensed.

EP 0 226 330 A1

FIG. 1

## CONTROLLING THE OPERATION OF A GLASSWARE FORMING MACHINE

Glassware forming machines for forming articles such as bottles and jars have glass-forming moulds which are cooled by fluid, generally air, supplied to the machine. The dominant type of machine is the so-called I.S. machine or individual section machine. In conventional I.S. machines, air is blown on to the outside of the moulds to remove the heat absorbed by the moulds from the molten glass. In some machines, however, air or another fluid is passed through cooling passages formed in the mould. This invention is concerned with a control system for controlling the operation of such a glassware forming machine.

It is a well-known fact that as the ambient air conditions vary the speed of air cooled glassware forming machines has to be adjusted to take account of the varying cooling capacity of the air. The speed of the machine is expressed in articles per minute or machine cycles per minute. Thus, in the summer months when the ambient air temperature increases, machines have to be slowed down because the capacity of the cooling air to extract heat is reduced. Similarly as the air temperature in the winter months drops, the speed of the machines can be increased. In most cases the machine speed is set manually and is not, therefore, normally at the optimum speed for the ambient air conditions.

Attempts to alleviate the effect of varying cooling capacity of the ambient air have involved sensing the cooling capacity of the air and increasing or decreasing the flow of air accordingly so that despite varying cooling capacity the thermal balance of the moulds is maintained. Examples of this approach can be found in United Kingdom Patent Specification No. 2011128, US Patent Specification N. 3854921, and US Patent Specification No. 3860407. In the first two of these specifications, the effect of the cooling air on a body placed in the air stream is detected by sensing how much heat has to be supplied to the body to maintain it at a constant temperature. In US Patent Specification No. 3860407, the air temperature and pressure is measured and a damper is adjusted to bring the pressure to a level which will correspond with temperature measurement. US Patent Specification No. 3953188 describes a modification to the method of specification No. 3860407 in which a range of pressures which are acceptable is established, the lowermost pressure of the range representing the lowest acceptable pressure for stable air flow and the uppermost pressure of the range representing the maximum capacity of the fans to blow air to the machine. When the limits of the pressure range are reached, the temperature of the glass fed to the machine or the speed of the machine is adjusted to deal with the undesirable condition. In all these proposals, the control system strives to provide the correct amount of cooling for the machine speed setting which has been manually established. Thus, the machine is unlikely to operate at the maximum permissible speed and the production process is thus not as efficient as is theoretically possible.

It is an object of the present invention to provide a control system for controlling the operation of a glassware forming machine in which the machine is operated at the optimum speed for substantially all the period of operation.

The invention provides a control system for controlling the operation of a glassware forming machine which comprises glass-forming moulds which are cooled by air supplied to the machine, the control system comprising sensing means operable to sense the cooling capacity of air supplied to the machine, characterised in that the system also comprises:

means for establishing an upper and a lower limit for the speed of operation of the machine,

and means for adjusting the speed of the machine between the established limits in accordance with the cooling capacity sensed.

In a control system according to the last preceding paragraph, the speed of the machine is directly determined by the available cooling capacity so that the machine operates at optimum speed. Only when the speed reaches one of the pre-established limits does the machine not operate at maximum speed. These limits can be set with regard to the maximum operating speeds of the various mechanisms of the machine and/or or the associated glass feeder, conveyor and push-out mechanisms and with regard to the maximum length of time that glass can remain in the moulds of the machine in a successful forming operation.

Preferably the control system also comprises indicating means operable to indicate when the speed of the machine reaches one of the established limits. The indicating means may be an audible or visual warning to an operator of the machine or may be arranged to automatically cause emergency action to be taken for example closing down the machine.

The sensing means may comprise means for sensing the temperature of the air, for example a thermocouple, or means for sensing how much heat must be applied to a test body which is exposed to the air to maintain the test body at a constant temperature so that air temperature and humidity are taken into account. Such sensing means is described in the aforementioned patent specifications.

The invention provides a method of controlling the operation of a glassware forming machine which has glass-forming moulds which are cooled by air supplied to the machine, the method comprising sensing the cooling capacity of air supplied to the machine, characterised in that the method also comprises:

establishing an upper and a lower limit for the speed of operation of the machine,

and adjusting the speed of the machine between the established limits in accordance with the cooling capacity sensed.

There now follow detailed descriptions, to be read with reference to the accompanying drawings, of two control systems which are illustrative of the invention. It is to be understood that the illustrative control systems have been selected for description by way of example.

In the drawings:

Figure 1 is a diagrammatic view of the first illustrative control system; and

Figure 2 is a diagrammatic view of the second illustrative control system.

The illustrative control systems are for controlling the operation of a glassware forming machine 10 of the individual section type. The machine 10 has a plurality of sections 12 (4 shown in the drawings). The sections 12 comprise glass-forming moulds of conventional construction for forming glass gobs supplied to the machine from a feeder 14 into parisons and further glass-forming moulds also of conventional construction for forming the parisons into articles of glassware. The moulds of the sections are cooled by air which reaches the machine 10 along a duct 16. On arrival at the sections 12 the air which passes along the duct 16 is used to cool the glass-forming moulds. The air may be blown on to the outside of the moulds from cooling stacks arranged beside the moulds in conventional manner or may be passed through cooling passages formed in the moulds in the manner described in European Patent Specification No. 102820.

The speeds of operation of the machine 10 and of the feeder 14 (which have to be synchronised) are determined by the frequency of pulses on a signal line 18. The signal line 18 extends to both the machine 10 and also to the feeder 14. The feeder 14 may be driven by an a.c. electric motor whose speed depends on the frequency of the signals received on the line 18 and the speed of the machine 10 may be determined by the speed of rotation of a timing drum driven by an electric motor whose speed of rotaion depends on the frequency of the singals on the line 18. Alternatively, the machine 10 and the feeder 14 may be controlled by electronic control means whose speed of operation is determined by the frequency of the signals on the line 18.

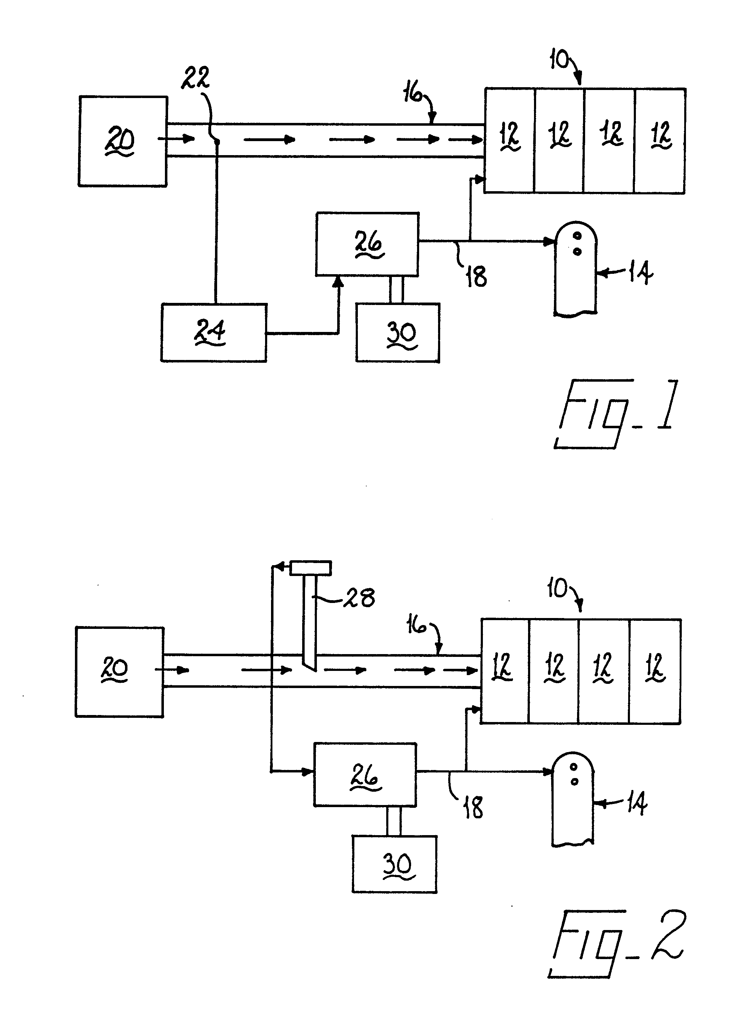

Air drawn from the ambient atmosphere is blown into the duct 16 by a fan 20 which operates at a constant speed. In the first illustrative control system (Figure 1), as the air passes along the duct 16 its temperature is sensed by a thermocouple 22. The thermocouple 22 senses the temperature of the air which is related to its cooling capacity. The output of the thermocouple 22 passed to a micro processor 24 which applies an algorithm to the signal from the thermocouple 22 and passes its output to a micro processor 26 which produces the signal on the signal line 18 from the signal it receives from the micro processor 24.

In the second illustrative control system (Figure 2), instead of the thermocouple 22 and the microprocessor 24, a mould cooling wind sensor 28 of the type described in GB Patent Specification No. 2011128 is used to sample the air in the duct 16. The output signal of the sensor 28 is used by the micro processor 26 to produce the signal on the signal line 18. This sensor 28 senses how much heat must be applied to a test body, representing a mould, which is exposed to the air to maintain the test body at a constant temperature.

In both control systems, keyboard 30 is connected to the microprocessor 26 and is used to input manually an upper and a lower limit for the speed of operation of the machine 10. The upper limit is set with regard to the minimum length of time that the machine cycle must occupy bearing in mind the time taken for the various mechanisms of the sections 12 to operate and the lower limit is set with regard to the maximum length of time that the glass can remain in the mould and still be workable.

The illustrative control systems, thus, comprise a keyboard 30 which is means for establishing an upper and a lower limit for the speed of operation of the machine 10, and sensing means in the form of the thermocouple 22 or the sensor 28 operable to sense the cooling capacity of air supplied to the machine along the duct 16. The micro processor 26 provides means for adjusting the speed of the machine between the established limits in accordance with the cooling capacity sensed. The micro processor 26 is arranged to operate indicating means (not shown) operable to indicate when the speed of the machine 10 reaches one of the established limits. The indicating means produces an audible warning to an operator of the machine.

The illustrative control systems, enable methods of controlling the operation of a glassware forming machine, which has glass-forming moulds which are cooled by air supplied to the machine, to be carried out comprising establishing an upper and a lower limit for the speed of operation of the machine using the keyboard 30 to input the limits to the microporcessor 26, sensing the cooling capacity of air supplied to the machine by the sensing 22 or 28, and adjusting the speed of the machine between the established limits in accordance with the cooling capacity sensed by varying signal on the line 18.

## Claims

1. A control system for controlling the operation of a glassware forming machine 10 which comprises glass-forming moulds which are cooled by air supplied to the machine, the control system comprising sensing means (22; 28) operable to sense the cooling capacity of air supplied to the machine, characterised in that the system also comprises:
means (30) for establishing an upper and a lower limit for the speed of operation of the machine,
and means (26) for adjusting the speed of the machine between the established limits in accordance with the cooling capacity sensed.

2. A control system according to claim 1, characterised in that the adjusting means (26) comprises indicating means operable to indicate when the speed of the machine (10) reaches one of the established limits.

3. A control system according to either one of claims 1 and 2, characterised in that the sensing means (22) comprises means for sensing the temperature of the air.

4. A control system according to either one of claims 1 and 2, characterised in that the sensing means (28) comprises:
means for sensing how much heat must be applied to a test body which is exposed to the air to maintain the test body at a constant temperature.

5. A method of controlling the operation of a glassware forming machine (10) which has glass-forming moulds which are cooled by air supplied to the machine, the method comprising sensing the cooling capacity of air supplied to the machine, characterised in that the method also comprises:
establishing an upper and a lower limit for the speed of operation of the machine,
and adjusting the speed of the machine between the established limits in accordance with the cooling capacity sensed.

6. A method according to claim 5, characterised in that the cooling capacity is sensed by sensing the temperature of the air.

7. A method according to claim 5, characterised in that the cooling capacity is sensed by sensing how much heat must be applied to a test body which is exposed to the air to maintain the test body at a constant temperature.

Fig_1

Fig_2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-3 953 188 (FERTIK)<br><br>* Figure 1; columns 3,4,5, lines 1-52; column 8, lines 59-68; column 9, lines 1-6; claim 1 *<br><br>--- | 1,3,5,<br>6 | C 03 B 9/38<br>C 03 B 9/40<br>G 05 D 23/00 |
| A,D | GB-A-2 011 128 (ROCKWARE GLASS LTD)<br>* Whole document *<br><br>----- | 1,5 | |

TECHNICAL FIELDS
SEARCHED (Int. Cl.4)

C 03 B 9/00
G 05 D 23/00

The present search report has been drawn up for all claims

| Place of search | Date of completion of the search | Examiner |
|---|---|---|
| THE HAGUE | 10-02-1987 | VAN DEN BOSSCHE W.L. |